# EUROPÄISCHE PATENTSCHRIFT

(11) **EP 3 945 083 B1**
(45) Veröffentlichungstag und Bekanntmachung des Hinweises auf die Patenterteilung: **12.06.2024**
(21) Anmeldenummer: 21186158.8
(22) Anmeldetag: 16.07.2021
(51) Int. Cl.: C04B 28/18, C04B 40/02, C04B 111/28

(54) **KALKSANDFORMKÖRPER SOWIE VERFAHREN ZU DESSEN HERSTELLUNG**
LIME SAND MOULDING AND METHOD FOR THE PRODUCTION OF SAME
CORPS MOULÉ SILICO-CALCAIRE, AINSI QUE SON PROCÉDÉ DE FABRICATION

(30) Priorität: 27.07.2020 DE 102020209454
(43) Veröffentlichungstag der Anmeldung: 02.02.2022
(73) Patentinhaber: Xella Technologie- und Forschungsgesellschaft mbH, 14797 Kloster Lehnin (DE)
(72) Erfinder: Hantschick, Henry, 03222 Lübbenau (DE); Schmidt, Karin, 39307 Genthin (DE); Weinfurterová, Eva, 30110 Plzen (CZ)
(74) Vertreter: Dr. Solf & Zapf Patent- und Rechtsanwalts PartG mbB

(56) Entgegenhaltungen:
- EP-A1- 0 856 496
- EP-A1- 3 162 777
- CH-A- 379 998
- DE-A1- 4 104 919
- DE-A1-102004 017 199
- DE-B- 1 057 945
- DE-C1- 19 858 342
- DE-U1- 29 724 915
- GB-A- 713 468

## Beschreibung

Die vorliegende Erfindung betrifft einen hydrothermal gehärteten Kalksandformkörper, vorzugsweise einen Kalksandstein, sowie ein Verfahren zu dessen Herstellung.

Kalksandsteine sind künstlich hergestellte Bausteine aus Kalksandmaterial. Sie werden hergestellt durch Mischen mindestens einer SiO₂-Komponente, z.B. Quarzsand, und mindestens einer Kalkkomponente, z.B. Branntkalk und/oder Kalkhydrat, mit Wasser zu einer formbaren Frischmasse. Aus der Frischmasse werden Formkörperrohlinge bzw. Steinrohlinge, geformt, insbesondere gepresst, die zur Aushärtung in einem Autoklav hydrothermal behandelt werden. Die hydrothermale Härtung erfolgt in der Regel unter Sattdampfbedingungen bei 14-16 bar für 5 bis 16 Stunden, insbesondere 6 bis 12 Stunden. Dabei reagiert die Kalkkomponente mit der SiO₂-Komponente unter Bildung von Calciumsilikathydratphasen (CSH-Phasen), unter anderem zu 11Ä-Tobermorit, die die nicht vollständig durchreagierten Körner der SiO₂-Komponente(n) oberflächlich miteinander verkitten. Bei der hydrothermalen Härtung wird also die Kieselsäure von der Oberfläche der Körner der SiO₂-Komponente(n) abgelöst und reagiert mit dem Kalk. Hydrothermal gehärtete Kalksandsteine enthalten somit eine Bindematrix aus Calciumsilikathydratphasen, welche die oberflächlich reagierten Körner der SiO₂-Komponente(n) miteinander verkittet bzw. verbindet.

Im Gegensatz zu der Herstellung von Poren- oder Schaumbetonmaterial enthält die Frischmasse weder einen Poren- oder Schaumbildner noch vorgefertigten Schaum.

Auf dem Markt wird eine Vielzahl an Steinformaten von Kalksandsteinen für die Handvermauerung und für das Vermauern mit Versetzgerät angeboten. Dabei werden nicht nur Kalksand-Mauersteine mit unterschiedlichen Steinformaten für die Erstellung von Mauerwerk, z.B. nach DIN EN 1996-1-1:2019-12, sondern auch andere Bauteile aus Kalksandmaterial, z.B. Bauteile zur Systemergänzung, Kalksand-Bauplatten sowie Sonderprodukte vertrieben (siehe z.B. https://www.kalksandstein.de/bv_ksi/kalksandstein-produkte). Mit Kalksand-Bauplatten werden z.B. schlanke, nicht tragende Wände hergestellt. Bei den Bauteilen zur Systemergänzung handelt es sich z.B. um Kalksand-U-Schalen oder Kalksand-Stürze.

Kalksand-Wärmedämmsteine und thermisch optimierte Kalksand-Kimmsteine ermöglichen die Erstellung von Wänden aus einem Baustoff.

Bei Kalksand-Wärmedämmsteinen handelt es sich um wärmetechnisch optimierte Kalksandsteine, die nach allgemeiner bauaufsichtlicher Zulassung unter Verwendung eines natürlichen Leichtzuschlags hergestellt werden (https://www.kalksandstein.de/bv_ksi/ks-kimmsteine-ks-waermedaemmsteine?page_id=13096). Die Zuschlagkörner des Leichtzuschlags sind ebenfalls in die Bindematrix aus den Calciumsilikathydratphasen eingebunden. Zudem handelt es sich in der Regel um SiO₂-haltige Leichtzuschläge, so dass die Zuschlagkörner bei der hydrothermalen Härtung ebenfalls oberflächlich mit der Kalkkomponente reagieren.

Bei Leichtzuschlägen handelt es sich bekanntermaßen um Zuschläge mit einer Kornrohdichte bis maximal 2.000 kg/m³. Im Rahmen der Erfindung werden bevorzugt Leichtzuschläge mit einer Kornrohdichte unter 1.000 kg/m³ verwendet.

Kimmsteine dienen zum Höhenausgleich, sie werden als Kimmschicht am Wandfuß einer Mauer versetzt. Auch die Kalksand-Kimmsteine können zur Reduzierung der Wärmebrückenwirkung der untersten Steinlage wärmetechnisch optimiert sein, um Wärmeverluste in diesem Bereich zu verringern.

Die wärmetechnisch optimierten Kalksandsteine sollen dabei immer eine möglichst hohe Steindruckfestigkeit und gleichzeitig eine möglichst geringe Wärmeleitfähigkeit aufweisen. Nachteilig ist, dass hohe Festigkeiten in der Regel nur mit geringen Leichtzuschlagstoffmengen erzielbar sind, woraus aber dann relativ hohe Wärmeleitfähigkeiten resultieren, so dass für unterschiedliche Anforderungen Bausteine unterschiedlicher Zusammensetzungen hergestellt werden müssen.

In der DE 197 37 447 A1 wird z.B. ein Kalksand-Wärmedämmstein beschrieben, der neben Kalk, Wasser 35 bis 55 M.-% Blähtonsand und 30 bis 50 M.-% Bimssand enthalten kann.

Des Weiteren ist es aus der DE-OS 38 16 686 A1 bekannt, derartige Bausteine unter Verwendung von Blähton- oder Blähschiefer herzustellen.

Gemäß der DE 41 04 919 A1 wird bei der Herstellung - gegebenenfalls zusätzlich zu Blähtongranulat und/oder Blähglasgranulat - eine amorphe silikatische Komponenten wie Glasmehl oder Bimsmehl verwendet. Durch den Zusatz dieser amorphen silikatischen Komponenten soll die Wärmeleitfähigkeit bei etwa gleichbleibender Druckfestigkeit verringert werden.

Aus der DE 10 2004 017 199 A1 geht ein calciumsilikathydratgebundener Baustein aus Kalksandmaterial hervor, der aus einer trockenen Rohstoffmischung mit folgender Zusammensetzung hergestellt ist:
a) 5 bis 15 Gew.-% CaO einer CaO-Komponente,
b) 3 bis 10 Gew.-% SiO₂ einer SiO₂-Komponente, insbesondere Quarzmehl,
c) 35 bis 50 Gew.-%
   (c₁) Porenbetonmehl oder
   (c₂) Schaumbetonmehl oder
   (c₃) Porenbetonmehl und Flugasche oder
   (c₄) Schaumbetonmehl und Flugasche oder
   (c₅) Flugasche; sowie
d) 35 bis 50 Gew.-% Bims,
wobei die Summe der Komponenten aus (c) und (d) ≤ 85 Gew.-% ist.

Gemäß dem nächstliegenden Beispiel 2 der DE 10 2004 017 199 A1 enthält die trockene Rohstoffmischung 40,5 Gew.-% Yali-Bims, 40,5 Gew.-% Porenbeton-Bruch, 5 Gew.-% Quarzmehl und 14 Gew.-% Kalkhydrat. Der hergestellte Baustein weist eine Rohdichte von 1,08 kg/dm³, eine Druckfestigkeit von 20 N/mm² und eine Wärmeleitfähigkeit λ₁₀ₜᵣ von 0,28 W/(m·K) auf.

Und gemäß Beispiel 3 der DE 10 2004 017 199 A1 enthält die trockene Rohstoffmischung 40,5 Gew.-% Yali-Bims, 20,5 Gew.-% Porenbeton-Bruch, 20 Gew.-% Flugasche, 14 Gew.-% Kalkhydrat und 5 Gew.-% Quarzmehl. Der hergestellte Baustein weist eine Rohdichte von 1,15 kg/dm³, eine Druckfestigkeit von 28 N/mm² und eine Wärmeleitfähigkeit λ₁₀ₜᵣ von 0,30 W/(m·K) auf.

Die Flugasche dient bekanntermaßen dazu, die Druckfestigkeit zu verbessern, insbesondere da sie aufgrund ihrer geringen Korngröße vorhandene Hohlräume ausfüllt. Zudem verringert die Flugasche durch den hohen Gehalt an amorphen Bestandteilen die Wärmeleitfähigkeit. Außerdem steht Flugasche aufgrund der reduzierten Kohleverbrennung immer weniger zur Verfügung.

Aufgabe der Erfindung ist die Bereitstellung eines wärmetechnisch optimierten Kalksandformkörpers aus hydrothermal gehärtetem Kalksandmaterial, vorzugsweise eines wärmetechnisch optimierten Kalksandsteins, bevorzugt eines Kalksand-Wärmedämmsteins oder eines Kalksand-Kimmsteins, der eine gute Druckfestigkeit und geringe Wärmeleitfähigkeit aufweist.

Weitere Aufgabe ist die Bereitstellung eines Verfahrens zur Herstellung des Kalksandformkörpers.

Diese Aufgaben werden durch einen Kalksandformkörper mit den Merkmalen von Anspruch 1 sowie ein Verfahren mit den Merkmalen von Anspruch 6 gelöst. Vorteilhafte Weiterbildungen der Erfindung sind in den sich jeweils anschließenden Unteransprüchen gekennzeichnet.

Im Rahmen der Erfindung wurde dabei herausgefunden, dass ein Kalksandformkörper mit guter Druckfestigkeit und geringer Wärmeleitfähigkeit auch ohne die Verwendung von Flugasche hergestellt werden kann, wenn als Leichtzuschläge Porenbetongranulat, Bimssteingranulat und Blähtongranulat enthalten sind. Der erfindungsgemäße Kalksandformkörper weist somit eine Bindematrix aus Calciumsilikathydratphasen auf, welche die Leichtzuschlagkörner aus Poren- und/oder Schaumbeton, Bimsstein und Blähton miteinander verkittet bzw. verbindet.

Dabei wurde zudem festgestellt, dass es vorteilhaft ist, wenn der Anteil an Poren- oder Schaumbeton im Vergleich zu bekannten Rezepturen verringert wird und der Anteil an Bimsstein und Blähton erhöht wird. Auch ist es vorteilhaft, den Anteil an Quarz in der Ausgangsmischung zu erhöhen.

Demgemäß wird zur Herstellung des erfindungsgemäßen Kalksandformkörpers eine trockene Rohstoffmischung mit folgenden Bestandteilen verwendet:
a) einer Kalkkomponente, vorzugsweise Kalkhydrat und/oder Branntkalk,
b) gemahlenem Quarz,
c) Poren- oder Schaumbetongranulat,
d) Bimssteingranulat,
e) Blähtongranulat.

Vorzugsweise wird zur Herstellung des erfindungsgemäßen Kalksandformkörpers eine trockene Rohstoffmischung mit folgender Zusammensetzung verwendet:
a) 13 bis 22 M.-%, vorzugsweise 14,5 bis 20 M.-%, Kalkkomponente, vorzugsweise Kalkhydrat und/oder Branntkalk,
b) 18 bis 26 M.-%, vorzugsweise 19 bis 25 M.-%, gemahlener Quarz,
c) 15 bis 20 M.-%, vorzugsweise 16 bis 18 M.-%, Poren- oder Schaumbetongranulat,
d) 18 bis 26 M.-%, vorzugsweise 19 bis 25 M.-%, Bimssteingranulat,
e) 18 bis 25 M.-%, vorzugsweise 20 bis 23 M.-%, Blähtongranulat.

Im Rahmen der Erfindung wird aufgrund des hohen Gehalts an Kalkkomponente und der Wärmeentwicklung beim Ablöschen von Branntkalk vorzugsweise ausschließlich Kalkhydrat als Kalkkomponente verwendet.

In diesem Fall wird zur Herstellung des erfindungsgemäßen Kalksandformkörpers vorzugsweise eine trockene Rohstoffmischung mit folgender Zusammensetzung verwendet:
a) 18 bis 22 M.-%, vorzugsweise 19 bis 20 M.-% Kalkhydrat,
b) 18 bis 25 M.-%, vorzugsweise 19 bis 24 M.-%, gemahlener Quarz,
c) 15 bis 20 M.-%, vorzugsweise 16 bis 17 M.-%, Poren- oder Schaumbetongranulat,
d) 18 bis 25 M.-%, vorzugsweise 19 bis 24 M.-%, Bimssteingranulat,
e) 18 bis 24 M.-%, vorzugsweise 20 bis 22 M.-%, Blähtongranulat.

Wird zur Herstellung des erfindungsgemäßen Kalksandformkörpers ausschließlich Branntkalk als Kalkkomponente verwendet, wird vorzugsweise eine trockene Rohstoffmischung mit folgender Zusammensetzung verwendet:
a) 13 bis 18 M.-%, vorzugsweise 14,5 bis 16,5 M.-% Branntkalk,
b) 20 bis 26 M.-%, vorzugsweise 20 bis 25 M.-%, gemahlener Quarz,
c) 15 bis 20 M.-%, vorzugsweise 17 bis 18 M.-%, Poren- oder Schaumbetongranulat,
d) 19 bis 26 M.-%, vorzugsweise 20 bis 25 M.-%, Bimssteingranulat,
e) 20 bis 25 M.-%, vorzugsweise 21 bis 23 M.-%, Blähtongranulat.

Dabei ergibt die Summe der Bestandteile a) bis e) vorzugsweise mindestens 98 M.-%, bevorzugt 100 M.-%, bezogen auf die gesamte Trockenmasse der Rohstoffmischung. Die einzelnen Bestandteile a) bis e) addieren sich also zu mindestens 98 M.-%, bevorzugt zu 100 M.-%. Die trockene Rohstoffmischung umfasst dabei alle zur Herstellung verwendeten trockenen Komponenten.

Erfindungsgemäß gilt bei den jeweiligen Zusammensetzungen jeweils jeder der offenbarten Wertebereiche als für sich genommen vorteilhaft und kann mit jedem anderen Wertebereich kombiniert werden.

Bei dem gemahlenen Quarz handelt es sich vorzugsweise um gemahlenen Quarzsand. Vorzugsweise weist der gemahlene Quarz, insbesondere der gemahlene Quarzsand, eine Korngröße ≦ 63 µm, bevorzugt ≦ 30 µm, bestimmt mittels Laserlichtbeugung gemäß ISO 13320:2020-01, auf.

Des Weiteren weist der gemahlene Quarz, insbesondere der gemahlene Quarzsand, vorzugsweise einen d₉₇-Wert von 12 bis 22 µm, bevorzugt 14 bis 20 µm, und/oder einen d₅₀-Wert von 1 bis 7 µm, bevorzugt von 2 bis 6 µm, bestimmt mittels Laserlichtbeugung gemäß ISO 13320:2020-01, auf. Es handelt sich somit vorzugsweise um Quarzmehl.

Dabei weisen auf dem Fachgebiet und somit auch im Rahmen der Erfindung verwendete Körnungen bzw. Granulate Körner unterschiedlicher Größe auf. Sie weisen also eine Kornverteilung bzw. Korngrößenverteilung auf. Es handelt sich nicht um Einkornfraktionen bzw. -gruppen.

Die Bezeichnung Kornfraktion bzw. Kornklasse meint dabei, dass keine Körner auf dem oberen Sieb liegen bleiben und keine durch das untere durchfallen. Es liegt also kein Überkorn und kein Unterkorn vor. Im Gegensatz dazu schließt die Bezeichnung "Korngruppe" ein, dass einige Körner auf dem oberen Sieb liegen bleiben (Überkorn) und andere durch das untere Sieb durchfallen (Unterkorn).

Sofern nicht anderweitig angegeben, werden die Korngrößen im Rahmen der Erfindung zudem gemäß DIN 933-1:2012-03 (Trockensiebung) bestimmt.

Die Schüttdichte gemäß DIN EN ISO 60:2000-01 des gemahlenen Quarzes, insbesondere des gemahlenen Quarzsands, beträgt zudem vorzugsweise 0,55 bis 0,65 g/cm³.

Erfindungsgemäß enthält die Rohstoffmischung, wie bereits erläutert, Poren- oder Schaumbetongranulat. Poren- bzw. Schaumbetongranulat besteht aus mechanisch zerkleinertem, insbesondere gemahlenem, Poren- bzw. Schaumbetonmaterial. Dabei kann es sich um Recyclingmaterial oder um ein bei der Herstellung von Poren- oder Schaumbetonformkörpern anfallendes Abfallmaterial handeln.

Der Begriff Poren- oder Schaumbetongranulat bzw. Poren/Schaumbetongranulat ist im Rahmen der Erfindung so zu verstehen, dass das Granulat ausschließlich aus Porenbeton oder ausschließlich aus Schaumbeton oder aus einem Gemisch aus beidem bestehen kann. Vorzugsweise handelt es sich im Rahmen der Erfindung ausschließlich um Porenbetongranulat.

Porenbetonformkörper werden hergestellt aus einer wässrigen Mischung bzw. Frischbetonmasse, welche mindestens eine im Hydrothermalprozess reaktionsfähige CaO-Komponente und mindestens eine im Hydrothermalprozess reaktionsfähige SiO₂-Komponente, ein Treibmittel, insbesondere Aluminiumpulver- und/oder -paste, sowie gegebenenfalls, insbesondere inerte, Zusatzstoffe enthält. Außerdem enthält die Frischbetonmasse üblicherweise mindestens ein Zusatzmittel, z.B. ein Fließmittel und/oder ein Dispergiermittel. Die Frischbetonmasse wird in eine Gießform gegossen, auftreiben und ansteifen gelassen, geschnitten und anschließend einer Dampfhärtung unterzogen. Im Gegensatz zu herkömmlichem, nicht autoklaviertem Beton weist Porenbetonmaterial keine groben Zuschlagkörner mit einer Korngröße > 1,0 mm auf. Für die Herstellung von hydrothermal gehärteten Schaumbetonformkörpern wird anstelle des Treibmittels vorgefertigter Schaum untergemischt oder die Frischmasse durch Rühren direkt aufgeschäumt und der Treibprozess entfällt.

Das Poren- oder Schaumbetongranulat wird im Rahmen der Erfindung vorzugsweise in einer etwas gröberen Kornfraktion als üblich verwendet. Üblicherweise weist das Poren- oder Schaumbetongranulat eine Korngröße ≦ 1,0 mm, insbesondere ≦ 0,5 mm auf.

Im Rahmen der Erfindung wurde nun herausgefunden, dass die Druckfestigkeit verbessert werden kann, wenn das Poren- oder Schaumbetongranulat sowohl eine Feinkornfraktion mit einer Korngröße ≦ 1,0 mm also auch eine Grobkornfraktion mit einer Korngröße > 1,0 mm aufweist. Dabei weist die Grobkornfraktion vorzugsweise eine maximale Korngröße ≦ 3 mm, bevorzugt ≦ 2 mm auf.

Der Anteil der Grobkornfraktion im Poren- oder Schaumbetongranulat beträgt zudem vorzugsweise 5 bis 25 M.-%, bevorzugt 7 bis 20 M.-%, besonders bevorzugt 8 bis 12 M.-%, bezogen auf die Gesamtmenge an Poren- oder Schaumbetongranulat.

Vorzugsweise weist das Poren- oder Schaumbetongranulat zudem einen d₇₀-Wertvon 0,35 bis 0,65 mm, bevorzugt 0,45 bis 0,55 mm, auf.

Vorzugsweise weist das Poren- oder Schaumbetongranulat zudem eine Schüttdichte gemäß DIN EN 1097-3:1998-06 von 450 bis 700 kg/m³, bevorzugt von 500 bis 650 kg/m³, auf.

Das Bimssteingranulat besteht vorzugsweise aus Naturbims, bevorzugt aus Yali-Bims.

Auch das Bimssteingranulat weist vorzugsweise sowohl eine Feinkornfraktion mit einer Korngröße ≦ 1,0 mm also auch eine Grobkornfraktion mit einer Korngröße > 1,0 mm auf.

Vorzugsweise weist das Bimssteingranulat eine Korngröße > 0 bis 4 mm, bevorzugt > 0 bis 3,15 mm, auf.

Der Anteil an Körnern mit einer Korngröße > 3,15 mm beträgt dabei vorzugsweise ≦ 10 M.-%, bevorzugt ≦ 5 M.-%, bezogen auf die Gesamtmenge an Bimsteingranulat.

Und/oder der Anteil an Körnern mit einer Korngröße ≦ 1 mm beträgt vorzugsweise 50 bis 75 M.-%, bezogen auf die Gesamtmenge an Bimssteingranulat.

Das Bimssteingranulat zeichnet sich durch eine geringe Wärmeleitfähigkeit und durch eine, im Gegensatz zum Quarz, geringere Schüttdichte aus. Vorzugsweise weist das Bimssteingranulat eine Schüttdichte gemäß DIN EN 1097-3:1998-06 von 700 bis 1100 kg/m³, bevorzugt 800 bis 1000 kg/m³, auf.

Das verwendete Blähtongranulat besteht in an sich bekannter Weise aus einer Vielzahl von Blähtonkörnern. Bei der Herstellung von Blähton wird bekanntermaßen Ton aufbereitet, gemahlen, unter Zugabe von Wasser zu Kügelchen granuliert und in einem Drehrohrofensystem bei ca. 1.200 °C gebrannt, wobei die Oberfläche versintert. Es entstehen kleine, strukturstabile Blähtonkugeln mit einer gesinterten Kugeloberfläche.

Im Rahmen der Erfindung hat es sich als vorteilhat für die Einstellung der Druckfestigkeit bei gleichzeitig guter Verdichtungsfähigkeit erwiesen, ein Gemisch aus runden, ungebrochenen und gebrochenen Blähtonkörnern einzusetzen. Besonders bevorzugt weist das Blähtongranulat 20 bis 50 M.-%, bevorzugt 35 bis 45 M.-%, gebrochene Blähtonkörner auf.

Vorzugsweise weist das Blähtongranulat eine Korngröße > 0 bis 4 mm, bevorzugt > 0,25 bis 4 mm, auf.

Der Anteil an Körnern mit einer Korngröße > 3,15 mm beträgt dabei vorzugsweise ≦ 10 M.-%, bevorzugt ≦ 5 M.-%.

Zudem weist das Blähtongranulat vorzugsweise eine Schüttdichte gemäß DIN EN 1097-3:1998-06 von 330 bis 550 kg/m³, bevorzugt 380 bis 480 kg/m³, auf.

Die Herstellung der erfindungsgemäßen Kalksandformkörper, insbesondere der Kalksandsteine, erfolgt in an sich bekannter Weise durch Herstellung einer Frischmasse aus den trockenen Rohstoffen und Wasser, wobei die Frischmasse erfindungsgemäß keine Flugasche enthält. Dabei werden z.B. zunächst die Rohstoffe Poren- oder Schaumbetongranulat, Bimssteingranulat, Blähtongranulat und der gemahlene Quarz, insbesondere der gemahlene Quarzsand, miteinander vermengt und anschließend die Kalkkomponente zugemischt bevor das Wasser zugegeben und intensiv weiter gemischt wird. Die Wassermenge wird dabei vorzugsweise so gewählt, dass eine Pressfeuchte von 15 bis 23 M.-%, bevorzugt 18 bis 20 M, erreicht wird. Wird als Kalkkomponente Branntkalk verwendet, verweilt die Frischmasse anschließend, vorzugsweise 60 bis 120 Minuten, in einem Reaktor bei Temperaturen von z.B. 60 bis 70 °C, insbesondere bis zum vollständigen Ablöschen des Branntkalks. Wird Kalkhydrat verwendet, ist eine so lange Verweilzeit nicht notwendig. Der Reaktor dient lediglich als Zwischenspeicher. Es kann somit auch ein anderer Zwischenspeicher verwendet werden.

Danach werden aus der Frischmasse Formkörperrohlinge gepresst. Insbesondere werden aus der Frischmasse Formsteinrohlinge, bevorzugt mit Pressdrücken von 85 bis 130 bar, insbesondere von 95 bis 115 bar, gepresst.

Die Formkörperrohlinge, insbesondere die Formsteinrohlinge, werden anschließend in Autoklaven unter Sattdampfbedingungen bei 14 bis 16 bar bzw. bei 194 bis 200 °C, vorzugsweise 5 bis 16 Stunden, insbesondere 6 bis 14 Stunden, gehärtet.

Die erfindungsgemäßen und/oder erfindungsgemäß hergestellten Kalksandformkörper, vorzugsweise die Kalksandsteine, weisen dabei folgende Eigenschaften auf:
Vorzugsweise weisen die Kalksandformkörper, insbesondere die Kalksandsteine, eine Trockenrohdichte gemäß DIN EN 772-13:2000-09 von 1,0 bis 1,5 kg/dm³, bevorzugt von 1,0 bis 1,2 kg/dm³, auf.

Vorzugsweise weisen die Kalksandformkörper, insbesondere die Kalksandsteine, eine Druckfestigkeit, vorzugsweise Steindruckfestigkeit, gemäß DIN EN 772-1:2016-05 von 15 bis 30 N/mm², bevorzugt von 20 bis 28 N/mm², auf.

Vorzugsweise weisen die Kalksandformkörper, insbesondere die Kalksandsteine, einen Trockenwert der Wärmeleitfähigkeit λ₁₀ₜᵣ gemäß DIN EN 12664:2001-05 von 0,23 bis 0,36 W/(m·K), bevorzugt von 0,27 bis 0,33 W/(m·K), auf.

Alle vorgenannten Eigenschaften der erfindungsgemäßen Kalksandformkörper bzw. der Rohstoffmischung und deren Bestandteile sind jeweils einzeln und in jeglicher Kombination erfindungsgemäß.

Zudem sind die jeweils angegebenen Ober- und Untergrenzen der einzelnen Bereichsangaben erfindungsgemäß alle miteinander kombinierbar.

Im Folgenden wird die Erfindung anhand von Ausführungsbeispielen verdeutlicht:
Es wurden folgende Rohstoffe verwendet:
- Quarzmehl Nr. 25, d₉₇-Wert=18 µm, d₅₀-Wert=4 µm, Dörentrup Quarz GmbH & Co. KG
- Porenbetonmehl 0 bis 2 mm (Korngruppe), Xella Werk Brück, d₇₀-Wert=0,5 mm, d₉₀-Wert=1,0 mm
- Weißkalkhydrat CL 90 WKH 2/2, Fels Werke, Werk Kaltes Tal
- Blähtongranulat Leca CN Blähton 0,5 bis 2,5 mm (Korngruppe), CN Consulting, 40 M.-% gebrochene Körner, 60 M.-% runde, ungebrochene Körner
- Bimssteingranulat Yali-Bims 0 bis 3 mm (Korngruppe), Nagel Baustoff GmbH
- Wasser

**Tabelle 1: Rezepturen**

| | **Rezeptur 1** | | **Rezeptur 2** | |
|---|---|---|---|---|
| **Rohstoff/ Anteil** | **kg _{trocken}** | **M.-%** | **kg _{trocken}** | **M.-%** |
| Quarzmehl | 430 | 20,0 | 500 | 23,3 |
| Porenbetonmehl | 360 | 16,7 | 360 | 16,7 |
| Blähtongranulat | 440 | 20,5 | 450 | 21,0 |
| Bimssteingranulat | 500 | 23,3 | 420 | 19,5 |
| Kalkhydrat | 420 | 19,5 | 420 | 19,5 |
| Gesamt Feststoffe | **2.150** | **100** | **2.150** | **100** |

Aus den angegebenen Rezepturen und Wasser wurden im Rahmen der laufenden Produktion Kalksandsteine mit den Maßen 498 mm x 240 mm x 125 mm gefertigt. Der Wassergehalt wurde so eingestellt, dass eine Pressfeuchte von 19 M.-% erreicht wurde. Die Pressfeuchte wird mittels der Darr-Methode durch Wägung und Trocknung auf Gewichtskonstanz bei 105°C bestimmt.

Die Herstellung der Frischmassen erfolgte über einen Eirich Produktionsmischer. Die Hauptmischzeit betrug 120 Sekunden. Die Pressfeuchte betrug 19 M.-%. Der Pressdruck betrug 110 bar. Die Autoklavierung erfolgte wie folgt:

| | |
|---|---|
| Auffahren: | 4,5 h |
| Haltephase | 12 h bei 15 bar |
| Abfahrphase | 6,0 h |

An den hergestellten Kalksandsteinen wurden anschließend die Druckfestigkeit, die Trockenrohdichte und der Trockenwert der Wärmeleitfähigkeit λ₁₀ₜᵣ bestimmt:

**Tabelle 2: Ergebnisse der Druckfestigkeits- und Rohdichtemessungen der nach Rezeptur 1 hergestellten Kalksandsteine**

| **Prüfverfahren** | **DIN EN 772-16** | **DIN EN 772-13** | **DIN EN 772-1** | | | |
|---|---|---|---|---|---|---|
| **Probe** | **Prüfkörperabmessungen** | **Trockenrohdichte** | **Druckfestigkeit** | | | |
| | **Länge** | **Breite** | **Höhe** | | **Prüfkörper** | **Stein mit Faktoren** |
| | **mm** | **mm** | **mm** | **kg/dm³** | **N/mm²** | **N/mm²** |
| **1-01** | 498,3 | 240,2 | 125,4 | 1,097 | 26,51 | 26,5 |
| **1-02** | 498,4 | 240,3 | 125,4 | 1,093 | 27,28 | 27,3 |
| **1-03** | 497,3 | 240,3 | 125,0 | 1,115 | 26,95 | 27,0 |
| **1-04** | 498,0 | 240,5 | 124,3 | 1,144 | 27,79 | 27,8 |
| **1-05** | 498,1 | 240,2 | 124,2 | 1,126 | 27,27 | 27,3 |
| **1-06** | 498,7 | 240,6 | 124,3 | 1,141 | 28,10 | 28,1 |

| | | | | | | |
|---|---|---|---|---|---|---|
| Formfaktor: 1,0 Feuchtefaktor: 1,0 | | | | | | |

**Tabelle 3: Ergebnisse der Messungen des Trockenwerts der WLF der nach Rezeptur 1 hergestellten Kalksandsteine**

| | **Trockenrohdichte** | ***λ*_{10,dry}** |
|---|---|---|
| **Prüfverfahren** | **EN 772-13** | **EN 12664** |
| **Probe** | **kg/dm³** | **W/(m·K)** |
| **1-01** | 1,123 | 0,2875 |
| **1-02** | 1,133 | 0,2936 |
| **1-03** | 1,133 | 0,2925 |

**Tabelle 4: Ergebnisse der chemischen Analyse des nach Rezeptur 1 hergestellten Kalksandsteins 1-01**

| Probe | SiO₂ | TiO₂ | Al₂O₃ | Fe₂O₃ | Mn₃O₄ | MgO | CaO | Na₂O | K₂O | Glühverlust |
|---|---|---|---|---|---|---|---|---|---|---|
| | M.-% | M.-% | M.-% | M.-% | M.-% | M.-% | M.-% | M.-% | M.-% | M.-% |
| 1-01 | 54,28 | 0,28 | 7,61 | 2,91 | 0,12 | 0,93 | 19,57 | 0,73 | 1,75 | 9,49 |

**Tabelle 5: Ergebnisse der Druckfestigkeits- und Rohdichtemessungen der nach Rezeptur 2 hergestellten Kalksandsteine**

| **Prüfverfahren** | **DIN EN 772-16** | | | **DIN EN 772-13** | **DIN EN 772-1** | |
|---|---|---|---|---|---|---|
| **Probe** | **Prüfkörperabmessungen** | | | **Trockenrohdichte** | **Druckfestigkeit** | |
| | **Länge** | **Breite** | **Höhe** | | **Prüfkörper** | **Stein mit Faktoren** |
| | **mm** | **mm** | **mm** | **kg/dm³** | **N/mm²** | **N/mm²** |
| **2-01** | 498,3 | 240,8 | 124,7 | 1,08 | 25,66 | 25,7 |
| **2-02** | 498,9 | 240,7 | 125,0 | 1,14 | 25,38 | 25,4 |
| **2-03** | 498,3 | 240,6 | 124,5 | 1,07 | 25,29 | 25,3 |
| **2-04** | 498,1 | 240,3 | 124,5 | 1,15 | 25,79 | 25,8 |
| **2-05** | 498,2 | 240,6 | 124,4 | 1,16 | 26,56 | 26,6 |
| **2-06** | 498,3 | 240,4 | 124,2 | 1,14 | 26,71 | 26,7 |

| | | | | | | |
|---|---|---|---|---|---|---|
| Formfaktor: 1,0 Feuchtefaktor: 1,0 | | | | | | |

**Tabelle 6: Ergebnisse der Messungen des Trockenwerts der WLF der nach Rezeptur 2 hergestellten Kalksandsteine**

| | **Trockenrohdichte** | ***λ*_{10,dry}** |
|---|---|---|
| **Prüfverfahren** | **EN 772-13** | **EN 12664** |
| **Probe** | **kg/dm³** | **W/(m·K)** |
| **2-01** | 1,123 | 0,2898 |
| **2-02** | 1,138 | 0,2999 |
| **2-03** | 1,122 | 0,2978 |

Es ist zu erkennen, dass die hergestellten Kalksandsteine alle den geforderten Anforderungen an die Druckfestigkeitsklasse 20, die Rohdichteklasse 1,2 und die deklarierte Wärmeleitfähigkeit erfüllen und dies ohne den Einsatz von Flugasche.

## Patentansprüche

1. Hydrothermal gehärteter Kalksandformkörper, vorzugsweise Kalksandstein, aufweisend eine Bindematrix aus Calciumsilikathydratphasen und Leichtzuschlagkörner aus Leichtzuschlag, wobei die Bindematrix die Leichtzuschlagkörner miteinander verkittet,
**dadurch gekennzeichnet, dass**
der Kalksandformkörper Leichtzuschlagkörner aus Poren- oder Schaumbeton, Bimsstein und Blähton aufweist und ohne Verwendung von Flugasche hergestellt ist.

2. Kalksandformkörper nach Anspruch 1,
**dadurch gekennzeichnet, dass**
der Leichtzuschlag des Kalksandformkörpers ausschließlich aus Leichtzuschlagkörnern aus Poren- und/oder Schaumbeton, Bimsstein und Blähton besteht.

3. Kalksandformkörper nach Anspruch 1 oder 2,
**dadurch gekennzeichnet, dass**
der Kalksandformkörper, insbesondere der Kalksandstein,
a) eine Trockenrohdichte gemäß DIN EN 772-13:2000-09 von 1,0 bis 1,5 kg/dm³, bevorzugt von 1,0 bis 1,2 kg/dm³,
und/oder
b) eine Druckfestigkeit gemäß DIN EN 772-1:2016-05 von 15 bis 30 N/mm², bevorzugt von 20 bis 28 N/mm²,
und/oder
c) einen Trockenwert der Wärmeleitfähigkeit *λ*_{10,tr} gemäß DIN EN 12664:2001-05 von 0,23 bis 0,36 W/(m K), bevorzugt von 0,27 bis 0,33 W/(m·K),
aufweist.

4. Kalksandformkörper nach einem der vorhergehenden Ansprüche,
**dadurch gekennzeichnet, dass**
es sich bei dem Kalksandstein um einen Kalksand-Wärmedämmstein und/oder einen thermisch optimierten Kalksand-Kimmstein handelt.

5. Kalksandformkörper nach einem der vorhergehenden Ansprüche,
**dadurch gekennzeichnet, dass**
der Kalksandformkörper sowohl runde, ungebrochene als auch gebrochene Blähtonkörner aufweist.

6. Verfahren zur Herstellung eines hydrothermal gehärteten Kalksandformkörpers, vorzugsweise eines Kalksandsteins, insbesondere eines Kalksandformkörpers gemäß einem der vorhergehenden Ansprüche, mit folgenden Verfahrensschritten:
a) Herstellen einer Frischmasse enthaltend eine trockene Rohstoffmischung und Wasser,
b) Pressen der Frischmasse zu einem Formkörperrohling, vorzugsweise zu einem Formsteinrohling,
c) Hydrothermales Härten des Formkörperrohlings im Autoklaven,
**dadurch gekennzeichnet, dass**
die trockene Rohstoffmischung folgende Komponenten aufweist:
a) eine Kalkkomponente, vorzugsweise Kalkhydrat und/oder Branntkalk, vorzugsweise in Mengen von 13 bis 22 M.-%, bevorzugt 14,5 bis 20 M.-%,
b) gemahlenen Quarz, vorzugsweise in Mengen von 18 bis 26 M.-%, bevorzugt 19 bis 25 M.-%,
c) Poren- oder Schaumbetongranulat, vorzugsweise in Mengen von 15 bis 20 M.-%, bevorzugt 16 bis 18 M.-%,
d) Bimssteingranulat, vorzugsweise in Mengen von 18 bis 26 M.-%, bevorzugt 19 bis 25 M.-%,
e) Blähtongranulat, vorzugsweise in Mengen von 18 bis 25 M.-%, bevorzugt 20 bis 23 M.-%,
wobei die Frischmasse keine Flugasche enthält.

7. Verfahren nach Anspruch 6,
**dadurch gekennzeichnet, dass**
eine trockene Rohstoffmischung mit folgender Zusammensetzung verwendet wird:
a) 18 bis 22 M.-%, vorzugsweise 19 bis 20 M.-% Kalkhydrat,
b) 18 bis 25 M.-%, vorzugsweise 19 bis 24 M.-%, gemahlener Quarz,
c) 15 bis 20 M.-%, vorzugsweise 16 bis 17 M.-%, Poren- oder Schaumbetongranulat,
d) 18 bis 25 M.-%, vorzugsweise 19 bis 24 M.-%, Bimssteingranulat,
e) 18 bis 24 M.-%, vorzugsweise 20 bis 22 M.-%, Blähtongranulat.

8. Verfahren nach Anspruch 6,
**dadurch gekennzeichnet, dass**
eine trockene Rohstoffmischung mit folgender Zusammensetzung verwendet wird:
a) 13 bis 18 M.-%, vorzugsweise 14,5 bis 16,5 M.-% Branntkalk,
b) 20 bis 26 M.-%, vorzugsweise 20 bis 25 M.-%, gemahlener Quarz,
c) 15 bis 20 M.-%, vorzugsweise 17 bis 18 M.-%, Poren- oder Schaumbetongranulat,
d) 19 bis 26 M.-%, vorzugsweise 20 bis 25 M.-%, Bimssteingranulat,
e) 20 bis 25 M.-%, vorzugsweise 21 bis 23 M.-%, Blähtongranulat.

9. Verfahren nach einem der Ansprüche 6 bis 8,
**dadurch gekennzeichnet, dass**
das Poren- oder Schaumbetongranulat
a) eine Schüttdichte gemäß DIN EN 1097-3:1998-06 von 450 bis 700 kg/m³, bevorzugt von 500 bis 650 kg/m³, aufweist,
und/oder
b) sowohl eine Feinkornfraktion mit einer Korngröße ≦ 1,0 mm als auch eine Grobkornfraktion mit einer Korngröße > 1,0 mm aufweist, wobei vorzugsweise die Grobkornfraktion eine maximale Korngröße ≦ 3 mm, bevorzugt ≦ 2 mm aufweist.

10. Verfahren nach Anspruch 9,
**dadurch gekennzeichnet, dass**
der Anteil der Grobkornfraktion im Poren- oder Schaumbetongranulat 5 bis 25 M.-%, bevorzugt 7 bis 20 M.-%, besonders bevorzugt 8 bis 12 M.-%, beträgt.

11. Verfahren nach einem der Ansprüche 6 bis 10,
**dadurch gekennzeichnet, dass**
das Poren- oder Schaumbetongranulat einen d₇₀-Wert von 0,35 bis 0,65 mm, bevorzugt 0,45 bis 0,55 mm, aufweist.

12. Verfahren nach einem der Ansprüche 6 bis 11,
**dadurch gekennzeichnet, dass**
der gemahlene Quarz, insbesondere der gemahlene Quarzsand,
a) eine Korngröße ≦ 63 µm, bevorzugt ≦ 30 µm, bestimmt mittels Laserlichtbeugung gemäß ISO 13320:2020-01,
und/oder
b) einen d₉₇-Wert von 12 bis 22 µm, bevorzugt 14 bis 20 µm, und/oder
c) einen d₅₀-Wert von 1 bis 7 µm, bevorzugt 2 bis 6 µm, bestimmt mittels Laserlichtbeugung gemäß ISO 13320:2020-01,
aufweist.

13. Verfahren nach einem der Ansprüche 6 bis 12,
**dadurch gekennzeichnet, dass**
das Bimssteingranulat aus Naturbims, bevorzugt aus Yali-Bims, besteht.

14. Verfahren nach einem der Ansprüche 6 bis 13,
**dadurch gekennzeichnet, dass**
das Bimssteingranulat
a) eine Korngröße ≦ 4 mm, bevorzugt ≦ 3,15 mm,
und/oder
b) einen Anteil an Körnern mit einer Korngröße > 3,15 mm von ≦ 10 M.-%, bevorzugt ≦ 5 M.-%,
und/oder
c) einen Anteil an Körnern mit einer Korngröße ≦ 1 mm von 50 bis 75 M.-%,
aufweist.

15. Verfahren nach einem der Ansprüche 6 bis 14,
**dadurch gekennzeichnet, dass**
das Bimssteingranulat sowohl eine Feinkornfraktion mit einer Korngröße ≦ 1,0 mm also auch eine Grobkornfraktion mit einer Korngröße > 1,0 mm aufweist, wobei vorzugsweise die Grobkornfraktion eine maximale Korngröße ≦ 4 mm, bevorzugt ≦ 3,15 mm aufweist.

16. Verfahren nach einem der Ansprüche 6 bis 15,
**dadurch gekennzeichnet, dass**
a) das Bimssteingranulat eine Schüttdichte gemäß DIN EN 1097-3:1998-06 von 700 bis 1100 kg/m³, bevorzugt 800 bis 1000 kg/m³, aufweist,
und/oder
b) das Blähtongranulat eine Schüttdichte gemäß DIN EN 1097-3:1998-06 von 330 bis 550 kg/m³, bevorzugt 380 bis 480 kg/m³, aufweist.

17. Verfahren nach einem der Ansprüche 6 bis 16,
**dadurch gekennzeichnet, dass**
das Blähtongranulat
a) eine Korngröße ≦ 4 mm, bevorzugt > 0,25 bis 4 mm, aufweist,
und/oder
b) einen Anteil an Körnern mit einer Korngröße > 3,15 mm von ≦ 10 M.-%, bevorzugt ≦ 5 M.-%, aufweist,
und/oder
c) sowohl runde, ungebrochene als auch gebrochene Blähtonkörnern aufweist, wobei das Blähtongranulat vorzugsweise 20 bis 50 M.-%, bevorzugt 25 bis 45 M.-%, gebrochene Blähtonkörner aufweist.

18. Verfahren nach einem der Ansprüche 6 bis 17,
**dadurch gekennzeichnet, dass**
a) mit einer Pressfeuchte von 15 bis 23 M.-%, bevorzugt 18 bis 20 M.-%, gepresst wird,
und/oder
b) mit Pressdrücken von 85 bis 130 bar, insbesondere von 95 bis 115 bar, gepresst wird,
und/oder
c) im Autoklaven unter Sattdampfbedingungen bei 14 bis 16 bar, vorzugsweise für 5 bis 16 Stunden, insbesondere für 6 bis 14 Stunden, gehärtet wird.

19. Verfahren nach einem der Ansprüche 6 bis 18,
**dadurch gekennzeichnet, dass**
die Summe der Bestandteile a) bis e) der Rohstoffmischung mindestens 98 M.-%, bevorzugt 100 M.-%, bezogen auf die gesamte Trockenmasse der Rohstoffmischung beträgt.

## Claims

1. Hydrothermally hardened sand-lime molded body, preferably sand-lime brick, comprising a binding matrix of calcium silicate hydrate phases and lightweight aggregate grains of lightweight aggregate, wherein the binding matrix agglutinates the lightweight aggregate grains with each other,
**characterized in that**
the sand-lime molded body comprises lightweight aggregate grains of autoclaved aerated or foamed concrete, pumice and expanded clay and is manufactured without the use of fly ash.

2. Sand-lime molded body according to claim 1,
**characterized in that**
the lightweight aggregate of the sand-lime molded body consists exclusively of lightweight aggregate grains of autoclaved aerated and/or foamed concrete, pumice and expanded clay.

3. Sand-lime molded body according to claim 1 or 2,
**characterized in that**
the sand-lime molded body, in particular the sand-lime brick, comprises
a) a dry bulk density according to DIN EN 772-13:2000-09 of 1.0 to 1.5 kg/dm³, preferably 1.0 to 1.2 kg/dm³,
and/or
b) a compressive strength according to DIN EN 772-1:2016-05 of 15 to 30 N/mm², preferably 20 to 28 N/mm²,
and/or
c) a dry value of the thermal conductivity λ_{10,tr} in according to DIN EN 12664:2001-05 of 0.23 to 0.36 W/(m·K), preferably 0.27 to 0.33 W/(m·K).

4. Sand-lime molded body according to one of the preceding claims,
**characterized in that**
the sand-lime brick is a sand-lime thermal insulation brick and/or a thermally optimized sand-lime compensating brick.

5. Sand-lime molded body according to one of the preceding claims,
**characterized in that**
the sand-lime molded body has round, unbroken as well as broken expanded clay grains.

6. Method for producing a hydrothermally hardened sand-lime molded body, preferably a sand-lime brick, in particular a sand-lime molded body according to one of the preceding claims, comprising the following method steps:
a) Preparation of a fresh mass containing a dry raw material mixture and water,
b) Pressing the fresh mass into a molded body blank, preferably into a molded brick blank,
c) Hydrothermal hardening of the molded body blank in an autoclave,
**characterized in that**
the dry raw material mixture comprises the following components:
a) a lime component, preferably hydrated lime and/or quicklime, preferably in amounts of 13 to 22 ma.%, preferably 14.5 to 20 ma.%,
b) ground quartz, preferably in amounts of 18 to 26 ma.%, preferably 19 to 25 ma.%,
c) autoclaved aerated or foamed concrete granulate, preferably in amounts of 15 to 20 ma.%, preferably 16 to 18 ma.%,
d) pumice granulate, preferably in amounts of 18 to 26 ma.%, preferably 19 to 25 ma.%,
e) expanded clay granulate, preferably in amounts of 18 to 25 ma.%, preferably 20 to 23 ma.%,
whereby the fresh mass contains no fly ash.

7. Method according to claim 6,
**characterized in that**
a dry raw material mixture with the following composition is used:
a) 18 to 22 ma.%, preferably 19 to 20 ma.% hydrated lime,
b) 18 to 25 ma.%, preferably 19 to 24 ma.%, ground quartz,
c) 15 to 20 ma.%, preferably 16 to 17 ma.%, autoclaved aerated or foamed concrete granulate,
d) 18 to 25 ma.%, preferably 19 to 24 ma.%, of pumice granulate,
e) 18 to 24 ma.%, preferably 20 to 22 ma.%, expanded clay granulate.

8. Method according to claim 6,
**characterized in that**
a dry raw material mixture with the following composition is used:
a) 13 to 18 ma.%, preferably 14.5 to 16.5 ma.% quicklime,
b) 20 to 26 ma.%, preferably 20 to 25 ma.%, ground quartz,
c) 15 to 20 ma.%, preferably 17 to 18 ma.%, autoclaved aerated or foamed concrete granulate,
d) 19 to 26 ma.%, preferably 20 to 25 ma.%, pumice granulate,
e) 20 to 25 ma.%, preferably 21 to 23 ma.%, expanded clay granulate.

9. Method according to one of claims 6 to 8,
**characterized in that**
the autoclaved aerated or foamed concrete granulate
a) comprises a bulk density according to DIN EN 1097-3:1998-06 of 450 to 700 kg/m³, preferably of 500 to 650 kg/m³,
and/or
b) comprises both a fine grain fraction with a grain size of ≦ 1.0 mm and a coarse grain fraction with a grain size > 1.0 mm, wherein preferably the coarse grain fraction comprises a maximum grain size of ≦ 3 mm, preferably ≦ 2 mm.

10. Method according to claim 9,
**characterized in that**
the proportion of the coarse grain fraction in the autoclaved aerated or foamed concrete granulate is 5 to 25 ma.%, preferably 7 to 20 ma.%, particularly preferably 8 to 12 ma.%.

11. Method according to one of claims 6 to 10,
**characterized in that**
the autoclaved aerated or foamed concrete granulate comprises a d₇₀ value of 0.35 to 0.65 mm, preferably 0.45 to 0.55 mm.

12. Method according to one of claims 6 to 11,
**characterized in that**
the ground quartz, in particular the ground quartz sand, comprises
a) a grain size ≦ 63 µm, preferably ≦ 30 µm, determined by laser light diffraction according to ISO 13320:2020-01,
and/or
b) a d₉₇-value of 12 to 22 µm, preferably 14 to 20 µm,
and/or
c) a d₅₀-value of 1 to 7 µm, preferably 2 to 6 µm, determined by laser light diffraction according to ISO 13320:2020-01.

13. Method according to one of claims 6 to 12,
**characterized in that**
the pumice granulate consists of natural pumice, preferably Yali pumice.

14. Method according to one of claims 6 to 13,
**characterized in that**
the pumice granulate comprises
a) a grain size ≦ 4 mm, preferably ^ 3.15 mm,
and/or
b) a proportion of grains with a grain size > 3.15 mm of ≦ 10 ma.-%, preferably ≦ 5 ma.-%,
and/or
c) a proportion of grains with a grain size ≦ 1 mm of 50 to 75 ma.%.

15. Method according to one of claims 6 to 14,
**characterized in that**
the pumice granulate comprises both a fine grain fraction with a grain size of ≦ 1.0 mm and a coarse grain fraction with a grain size > 1.0 mm, wherein preferably the coarse grain fraction comprises a maximum grain size of ≦ 4 mm, preferably ^ 3.15 mm.

16. Method according to one of claims 6 to 15,
**characterized in that**
a) the pumice granulate comprises a bulk density according to DIN EN 1097-3:1998-06 of 700 to 1100 kg/m³, preferably 800 to 1000 kg/m³,
and/or
b) the expanded clay granulate comprises a bulk density of 330 to 550 kg/m³, preferably 380 to 480 kg/m³, according to DIN EN 1097-3:1998-06.

17. Method according to one of claims 6 to 16,
**characterized in that**
the expanded clay granulate
a) comprises a grain size ≦ 4 mm, preferably > 0.25 to 4 mm,
and/or
b) comprises a proportion of grains with a grain size > 3.15 mm of ≦ 10 ma.-%, preferably ≦ 5 ma.-%,
and/or
c) comprises round, unbroken as well as broken expanded clay grains, the expanded clay granulate preferably comprising 20 to 50 ma.%, preferably 25 to 45 ma.%, of broken expanded clay grains.

18. Method according to one of claims 6 to 17,
**characterized in that**
a) it is pressed with a pressure moisture content of 15 to 23 ma.%, preferably 18 to 20 ma.%,
and/or
b) it is pressed at pressures of 85 to 130 bar, in particular 95 to 115 bar,
and/or
c) it is hardened in an autoclave under saturated steam conditions at 14 to 16 bar, preferably for 5 to 16 hours, in particular for 6 to 14 hours.

19. Method according to one of claims 6 to 18,
**characterized in that**
the sum of components a) to e) of the raw material mixture is at least 98 ma.%, preferably 100 ma.%, based on the total dry mass of the raw material mixture.

## Revendications

1. Corps moulé silico-calcaire durci hydrothermalement, de préférence brique silico-calcaire, comprenant une matrice de liaison constituée de phases de silicate de calcium hydraté et des grains d'agrégat léger constitués d'agrégat léger, la matrice de liaison mastiquant les grains d'agrégats légers les uns avec les autres,
**caractérisé en ce que**
le corps moulé silico-calcaire comprend des grains d'agrégats légers en béton cellulaire autoclavé ou en béton mousse autoclavé , en pierre ponce et en argile expansée et est fabriqué sans utilisation de cendres volantes.

2. Corps moulé silico-calcaire selon la revendication 1,
**caractérisé en ce que**
l'agrégat léger du corps moulé silico-calcaire se compose exclusivement de grains d'agrégat léger de béton cellulaire autoclavé et/ou de béton mousse autoclavé, de pierre ponce et d'argile expansée.

3. Corps moulés silico-calcaire selon la revendication 1 ou 2,
**caractérisé en ce que**
le corps moulé silico-calcaire, en particulier la brique silico-calcaire, comprend
a) une masse volumique apparente à sec selon DIN EN 772-13:2000-09 de 1,0 à 1,5 kg/dm³, de préférence de 1,0 à 1,2 kg/dm³,
et/ou
b) une résistance à la compression selon DIN EN 772-1:2016-05 de 15 à 30 N/mm², de préférence de 20 à 28 N/mm²,
et/ou
c) une valeur sèche de conductivité thermique λ₁₀ₜᵣ selon DIN EN 12664:2001-05 de 0,23 à 0,36 W/(m K), de préférence de 0,27 à 0,33 W/(m·K).

4. Corps moulé silico-calcaire selon l'une quelconque des revendications précédentes,
**caractérisé en ce que**
la brique silico-calcaire est une brique d'isolation thermique silico-calcaire et/ou une brique de compensation silico-calcaire optimisée thermiquement.

5. Corps moulé silico-calcaire selon l'une quelconque des revendications précédentes,
**caractérisé en ce que**
le corps moulé silico-calcaire comprend à la fois des grains d'argile expansée ronds, non brisés et brisés.

6. Procédé de fabrication d'un corps moulé silico-calcaire durci hydrothermalement, de préférence une brique silico-calcaire, en particulier un corps silico-calcaire selon l'une quelconque des revendications précédentes, comprenant les étapes de procédé suivantes:
a) Préparation d'une masse fraîche contenant un mélange sec de matières premières et de l'eau,
b) pressage de la masse fraîche en une ébauche de corps moulé, de préférence en une ébauche de brique moulée,
c) Durcissement hydrothermal de l'ébauche du corps moulé dans l'autoclave,
**caractérisé en ce que**
le mélange sec de matières premières comprend les composants suivants:
a) un composant calcaire, de préférence de la chaux hydratée et/ou de la chaux vive, de préférence en quantités de 13 à 22 % en masse, de manière particulièrement préférée de 14,5 à 20 % en masse,
b) de quartz broyé, de préférence en quantités de 18 à 26 % en masse, de manière particulièrement préférée de 19 à 25 % en masse,
c) du granulat de béton cellulaire autoclavé ou de béton mousse autoclavé, de préférence en quantités de 15 à 20 % en masse, de manière particulièrement préférée de 16 à 18 % en masse,
d) du granulat de pierre ponce, de préférence en quantités de 18 à 26 % en masse, de manière particulièrement préférée de 19 à 25 % en masse,
e) du granulat d'argile expansée, de préférence en quantités de 18 à 25 % en masse, de manière particulièrement préférée de 20 à 23 % en masse,
la masse fraîche ne contenant pas de cendres volantes.

7. Procédé selon la revendication 6,
**caractérisé en ce que**
un mélange sec de matières premières ayant la composition suivante est utilisé:
a) 18 à 22 % en masse, de préférence 19 à 20 % en masse de chaux hydratée,
b) 18 à 25 % en masse, de préférence 19 à 24 % en masse, de quartz broyé,
c) 15 à 20 % en masse, de préférence 16 à 17 % en masse, de granulat de béton cellulaire autoclavé ou de béton mousse autoclavé,
d) 18 à 25 % en masse, de préférence 19 à 24 % en masse, de granulat de pierre ponce,
e) 18 à 24 % en masse, de préférence 20 à 22 % en masse, de granulés d'argile expansée.

8. Procédé selon la revendication 6,
**caractérisé en ce que**
un mélange sec de matières premières ayant la composition suivante est utilisé:
a) 13 à 18 % en masse, de préférence 14,5 à 16,5 % en masse de chaux vive,
b) 20 à 26 % en masse, de préférence 20 à 25 % en masse, de quartz broyé,
c) 15 à 20 % en masse, de préférence 17 à 18 % en masse, de granulat de béton cellulaire autoclavé ou de béton mousse autoclavé,
d) 19 à 26 % en masse, de préférence 20 à 25 % en masse, de granulat de pierre ponce,
e) 20 à 25 % en masse, de préférence 21 à 23 % en masse, de granulat d'argile expansée.

9. Procédé selon l'une des revendications 6 à 8,
**caractérisé en ce que**
le granulat de béton cellulaire autoclavé ou de béton mousse autoclavé
a) comprend une masse volumique apparente selon DIN EN 1097-3:1998-06 de 450 à 700 kg/m³, de préférence de 500 à 650 kg/m³,
et/ou
b) comprend à la fois une fraction à grains fins avec une taille de grains ≦ 1,0 mm et une fraction à grains grossiers avec une taille de grain > 1,0 mm, la fraction à grains grossiers comprenant de préférence une taille de grain maximale ≦ 3 mm, de préférence ≦ 2 mm.

10. Procédé selon la revendication 9,
**caractérisé en ce que**
la proportion de la fraction à grains grossiers dans le granulat de béton cellulaire autoclavé ou de béton mousse autoclavé est de 5 à 25 % en masse, de préférence de 7 à 20 % en masse, de manière particulièrement préférée de 8 à 12 % en masse.

11. Procédé selon l'une des revendications 6 à 10,
**caractérisé en ce que**
le granulat de béton cellulaire autoclavé ou de béton mousse autoclavé comprend une valeur d₇₀ de 0,35 à 0,65 mm, de préférence de 0,45 à 0,55 mm.

12. Procédé selon l'une des revendications 6 à 11,
**caractérisé en ce que**
le quartz broyé, en particulier le sable de quartz broyé, comprend
a) une taille de grain ≦ 63 µm, de préférence ≦ 30 µm, déterminée par diffraction laser selon ISO 13320:2020-01,
et/ou
b) une valeur d₉₇ de 12 à 22 µm, de préférence de 14 à 20 µm,
et/ou
c) une valeur d₅₀ de 1 à 7 µm, de préférence de 2 à 6 µm, déterminée par diffraction laser selon ISO 13320:2020-01.

13. Procédé selon l'une des revendications 6 à 12,
**caractérisé en ce que**
le granulat de pierre ponce est composé de pierre ponce naturelle, de préférence de la pierre ponce Yali.

14. Procédé selon l'une des revendications 6 à 13,
**caractérisé en ce que**
le granulat de pierre ponce comprend
a) une taille de grain ≦ 4 mm, de préférence ≦ 3,15 mm,
et/ou
b) une proportion de grains d'une taille de grain > 3,15 mm de ≦ 10 M.%, de préférence ≦ 5 M.%,
et/ou
c) une proportion de grains d'une taille de grain ≦ 1 mm de 50 et 75 % en masse.

15. Procédé selon l'une des revendications 6 à 14,
**caractérisé en ce que**
le granulat de pierre ponce comprend aussi bien une fraction à grains fins avec une taille de grain ≦ 1,0 mm qu'une fraction à grains grossiers avec une taille de grain > 1,0 mm, la fraction à grains grossiers comprenant de préférence une taille de grain maximale ≦ 4 mm, de préférence ≦ 3,15 mm.

16. Procédé selon l'une des revendications 6 à 15,
**caractérisé en ce que**
a) le granulat de pierre ponce comprend une masse volumique apparente selon DIN EN 1097-3:1998-06 de 700 à 1100 kg/m³, de préférence de 800 à 1000 kg/m³,
et/ou
b) le granulat d'argile expansée comprend une masse volumique apparente selon DIN EN 1097-3:1998-06 de 330 à 550 kg/m³, de préférence de 380 à 480 kg/m³.

17. Procédé selon l'une des revendications 6 à 16,
**caractérisé en ce que**
le granulat d'argile expansée
a) comprend une taille de grain ≦ 4 mm, de préférence > 0,25 à 4 mm,
et/ou
b) comprend une proportion de grains d'une taille de grain > 3,15 mm de ≦ 10 % en masse, de préférence de ≦ 5 % en masse,
et/ou
c) comprend à la fois des grains d'argile expansée ronds, non brisés et brisés, le granulat d'argile expansée comprenant de préférence de 20 à 50 % en masse, de manière particulièrement préférée de 25 à 45 % en masse, de grains d'argile expansée brisés.

18. Procédé selon l'une des revendications 6 à 17,
**caractérisé en ce que**
a) il est pressé avec une humidité de pressage de 15 à 23 % en masse, de préférence de 18 à 20 % en masse,
et/ou
b) il est pressé à des pressions de 85 à 130 bars, en particulier de 95 à 115 bars,
et/ou
c) il est durci dans l'autoclave dans des conditions de vapeur saturée à une pression de 14 à 16 bars, de préférence pendant 5 à 16 heures, en particulier pendant 6 à 14 heures.

19. Procédé selon l'une des revendications 6 à 18,
**caractérisé en ce que**
la somme des composants a) à e) du mélange de matières premières est d'au moins 98 % en masse, de préférence 100 % en masse, par rapport à la masse sèche totale du mélange de matières premières.
